# EUROPEAN PATENT SPECIFICATION

(11) **EP 3 716 193 B1**
(45) Date of publication and mention of the grant of the patent: **11.06.2025**
(21) Application number: 20166527.0
(22) Date of filing: 27.03.2020
(51) Int. Cl.: G06Q 30/0601

(54) **SYSTEM AND METHOD FOR PRESENTING A PHYSICAL PRODUCT TO A CUSTOMER**
SYSTEM UND VERFAHREN ZUM PRÄSENTIEREN EINES PHYSISCHEN PRODUKTS VOR EINEM KUNDEN
SYSTÈME ET PROCÉDÉ DE PRÉSENTATION D'UN PRODUIT PHYSIQUE À UN CLIENT

(30) Priority: 27.03.2019 FI 20197054
(43) Date of publication of application: 30.09.2020
(73) Proprietor: doop Osakeyhtiö, 20100 Turku (FI)
(72) Inventor: Lehtonen, Antero, 20210 Turku (FI)

(56) References cited:
- EP-A1- 2 770 301
- CN-A- 109 360 275
- US-A1- 2015 023 602

## Description

### TECHNICAL FIELD OF THE INVENTION

The invention relates to a system and a method for presenting a physical product to a customer presented in the independent claims set out below. In particular, the invention relates to a new way of collecting information on the handling of a product to be presented and of a way of utilizing the collected information.

### TECHNICAL BACKGROUND

The presentation of products presented in stores is often ineffective. Insufficient information is available on the products. Customers get frustrated. On the other hand, it takes a lot of effort from the merchant to find out which products interest the customers to what extent. It is difficult to find out which ways to present products are interesting and which are not, which ways sell best.

EP 3098749 A1 discloses a system in which an accelerometer detects the movement of a sales article and sends information about it to sales staff, for example. Välkkynen P. et al. (Mobile Augmented Reality for Retail Environments, Proceedings of Workshop on Mobile Interaction in Retail Environments in Conjunction with MobileHCl, 2011) shows an augmented reality system intended for mobile use to provide product information to a consumer. EP 2770301 A1 discloses a vehicle navigation system, whose user interface displays the vehicle as a three-dimensional model. WO 2016097732 A1 discloses a method for combining a virtual 3D model of a body of a person with a 3D image of a garment. US 2018137664 A1 discloses a method of modelling and showing a virtual jewellery item. US 2016027099 A1 shows a device utilizing virtual glasses for product presentation. CN 109360275 A discloses a method for displaying an article where augmented reality is used. US 2015/023602 A1 presents pattern recognition strategies and recognition algorithms for recognizing or differentiating objects, and object model database for storing recognition models.

### OBJECT OF THE INVENTION

It is an object of the present invention to reduce or even eliminate the abovementioned problems appearing in prior art.

It is an object of the present invention to provide a solution by which familiarisation with the products is pleasant and effective for the customer.

It is an object of the present invention to provide a system by which a retailer, a store chain or product manufacturer can easily and accurately obtain information about which products are of interest to customers and which presentation is effective.

It is an object of the present invention to provide a more efficient way of monitoring the motion and movement of the products presented.

It is an object of the present invention to provide new tools for marketing and sales and for monitoring of them.

It is an object of the present invention to provide new security and logistics solutions.

### SUMMARY OF THE INVENTION

Among other things, in order to achieve the above-mentioned objects, the system, method and other objects of the invention are characterized by what is set forth in the appended independent claims.

The embodiments, examples and advantages mentioned in this text relate, where applicable, as well to the system, method as to any other aspect of the invention, even though it is not always specifically mentioned.

A typical system according to the invention for presenting physical products to a customer comprises
- monitoring means, arranged to monitor movement of the products and to produce movement data of the products; The monitoring means may comprise e.g. an accelerometer, an orientation sensor or pattern recognition means and necessary program code. The accelerometer may be e.g. biaxial or triaxial, and there may be several accelerometers;
- product determining means, e.g. a program code, arranged to determine which product is moved on basis of the movement data. The movement data, such as acceleration rate, may be set to have a limit value, the exceeding of which states that the product for which this movement data is produced by the monitoring means, is in motion;
- data storage, such as a database, comprising digital models of a plurality of products. Digital model means an electronic model that visually describes a product and can be displayed on a display device. It can be, for example, a three-dimensional model that can be viewed freely in different orientations, or a model in which the product is presented with separate two-dimensional images from only a few different directions, or a model in which a video clip is displayed when viewed from a certain direction. Digital models of products are structures well known in the prior art.
- activation means, e.g. a program code, arranged to activate a digital model of the moved product maintained in the data storage on basis of the movement data produced by the monitoring means. Activation means are known in the prior art;
- presentation means, e.g. any necessary equipment and program code, arranged to display the activated digital model to the client on a display device.

A typical method according to the invention for presenting physical products to a customer comprises at least the following steps
- monitoring movement of the products with monitoring means and producing movement data of the products;
- determining, on basis of the movement data, which product is moved;
- maintaining digital models of a plurality of products in a data storage;
- activating a digital model of the moved product on basis of the movement data produced with the monitoring means;
- displaying the activated digital model to the client on a display device.

The movement data may comprise, for example, acceleration data produced by an accelerometer, orientation data produced by an orientation sensor or location information produced by a locating device.

For example, a particular department in a store may have multiple products whose movement, acceleration, orientation, or location is monitored. When the system detects a particular product moving, it activates a digital model of that product and begins displaying it on a display device. One display can show several models at the same time. There may be several display devices and they may display the same or different material. For example, each product may be presented on its own display device, or one display may show a digital model that changes with the movement of the product and another display may show other product information related to the product.

In one embodiment of the invention, the monitoring means comprise a plurality of accelerometers attachable to the products for producing acceleration data of the products. In this way, the digital model is activated on basis of the acceleration data produced with the accelerometer attached to the product being moved.

In one embodiment of the invention, the monitoring means comprise pattern recognition means for produce movement data of the products. Thereby, the digital model is activated on basis of the movement data produced with the pattern recognition means.

In one embodiment of the invention, the monitoring means are arranged to monitor the orientation of the products and to produce orientation data of the products. Thereby, the activation means are arranged to activate the digital model of the product being moved on basis of the orientation data produced with the monitoring means.

One embodiment of the invention comprises calculation means, such as a program code, arranged to calculate orientation of the activated digital model on basis of the orientation data, so that the calculated orientation of the digital model changes when orientation of the physical product changes. In this case, in each calculated orientation a certain part of the digital model is calculated to be displayed on the display device. Thereby, the presentation means are arranged to display the activated digital model on the display device in the calculated orientation of the digital model. In this case, the method comprises the following steps:
- calculating the orientation of the activated digital model on basis of the orientation data with calculation means,
- changing the calculated orientation of the digital model when orientation of the physical product changes, whereby in each calculated orientation a certain part of the digital model is calculated to be displayed on the display device, whereby
- displaying the activated digital model on the display device in the calculated orientation of the digital model.

In one embodiment, the digital model of the moved product is displayed in the same or corresponding orientation as the moved physical product is in.

In one embodiment of the invention, the data storage comprises product information of the products to be presented, of which product information at least a portion is tied to a specific part of the digital model. Thereby, the system comprises product information selection means, arranged to select and to be displayed on the display device such product information, which is tied to the part of the digital model that is calculated to be displayed on the display device. Said part of the digital model can be, for example, a certain point or certain coordinates in the digital model, e.g. on the surface of the virtual object represented by the model.

In one embodiment of the invention, the digital model of the product comprises two or more two-dimensional images that show the product from different directions. In this case, in each of the calculated orientations, only one of said images is arranged to be displayed on the display device.

A system according to the invention comprises
- monitoring means for monitoring orientation of a product and for generating orientation data of the product. The monitoring means may comprise, e.g. an accelerometer or pattern recognition means;
- at least one display device;
- at least one computer;
- data transmission means between the monitoring means and the computer and between the computer and the display device.

An embodiment of the invention comprises on at least one computer
- a data storage, such as a database, comprising a digital model of a product;
- calculating means, for example a program code, for calculating movement, acceleration or orientation of the digital model on basis of movement data, acceleration data or orientation data;
- presentation means, for example a program code, for displaying the model to a customer on a display device.

A method according to the invention of presenting a physical product to a customer comprises at least the following steps
- monitoring the orientation of one or more products and generating product orientation information;
- maintaining a digital model of the product in a data storage, such as a database;
- calculating orientation of the digital model on basis of the orientation data;
- displaying the model in its calculated orientation to the customer on a display device.

The required computers, display devices and data transmission devices are known technology as such. A computer typically comprises a memory and program code to be executed therein, the program code arranged to perform required functions. The computer can be a stand-alone device or a server e.g. integrated into the monitoring devices or the display device or used over a network. Data transmission devices may include, for example, transmitters, receivers, conductors, devices required by data network and program codes for using these. Data transmission devices can be wired or wireless. There can be several display devices and they can present the same or different material, such as images, video or text. The display device may be, for example, a computer monitor, a television or a projector and a display surface.

Thus, it has now been found that information about movement, acceleration or orientation of a product can be easily combined with a digital model made of the product. In this way, the model, e.g. an enlarged image of the product, can be presented to a customer interested in the product, for example on a store screen. And when the product is turned, the displayed model can turn at the same pace.

One way of illustrating the invention is to say that with its help a digital model of a physical product presented to a client is activated, where the model is selected from a plurality of models on basis of the product being moved. Thanks to the invention, a digital model of the exact product observed by the customer can. With the invention, the orientation of the activated product can be detected. The invention makes it possible to present a digital model of a product matching to the orientation of the product.

Orientation data can mean, for example, information about the orientation or distance of the product relative to a reference point, such as a floor or a display device, information about turning the product relative to a particular fixed point or coordinate system, or information about movement and location of the product, for example within a store. The orientation data may comprise all or some of the above information.

In one embodiment of the invention, a data storage, such as a database, comprises product information of products, wherein the system comprises product information selection means, such as program code that selects the product information of the moved product to be shown to the customer on a display device. In a corresponding method, the product information of the movable product is displayed to the customer on a display device. The product information may include, for example, technical information describing the product. Product information may include information about restrictions on moving the product and give an alarm on a display or to the personnel if certain limit values are met.

In one embodiment of the invention an alarm is given if the product is handled too hard or in a wrong orientation or if it is taken to a forbidden location.

In one embodiment of the invention, at least a portion of the product information in the data storage is tied to a specific part of the product or the digital model of the product. Thereby, the system comprises means for selecting the product information to be shown to a customer on a display device corresponding to the orientation in which the model is calculated to be displayed. In a corresponding method, product information to be shown to the customer on a display device is chosen according to the orientation in which the model is shown. For example, the display can show technical information of parts of the product that are currently shown on the display.

In one embodiment of the invention, the digital model of the product comprises a three-dimensional model of the product, i.e. a 3D model, such as a CAD drawing. Thereby, calculating means for calculating orientation of the digital model comprise means for turning the 3D model on basis of the orientation data corresponding to the orientation of the physical product. In a corresponding method, when calculating the orientation of the digital model, the 3D model is turned corresponding to the orientation of the physical product. 3D model can mean, for example, a three-dimensional mathematical representation of a surface of a body with help of a specific software.

In one embodiment of the invention, the digital model of the product comprises two or more different images, such as two-dimensional images, that show the product from different directions. In this case, the calculating means for calculating the orientation of the digital model comprise means for selecting an image to be displayed on basis of the orientation information, so that the image as well as possible describes the orientation of the physical product. In a corresponding method, when calculating the orientation of a digital model, the image to be displayed is selected to be the one image that best describes the orientation of the physical product. Changing of the displayed image can be performed e.g. whenever the observed orientation of the physical product surpasses a certain limit value. Images can be, for example, photographs or drawings, such as 2D CAD drawings, from different directions of the product. In a simple example, the model consists of two images, e.g. front side and rear side of the product. When this kind of a system detects on basis of orientation data that the product has been turned beyond a predetermined limit value, for example a "midpoint" level, the image presented on the display device is switched.

In one embodiment of the invention, the digital model of the product comprises one or more video clips, such as a demonstration video, animation, or other motion picture. The digital model may also include sound, light effects, or some other element to capture customer's attention or to entertain them. Different elements can be combined in the same digital model. For example, from one direction or one side of the product the display device may show realistic-looking image of the product but turning the product into a certain orientation can start a video clip.

In one embodiment of the invention, the monitoring means for monitoring orientation of a product and generating orientation data comprise an accelerometer to be connected or attached to the product, and possibly a power supply such as a battery, a microcontroller and a radio transmitter. In a corresponding method, the orientation of the product is monitored, and the orientation data of the product is generated with an accelerometer attached to the product. The accelerometer, power supply, microcontroller and radio transmitter can conveniently be placed in one and the same housing as a so-called orientation sensor that detects a change in its orientation and sends the orientation data forward with the radio transmitter. The accelerometer and other necessary components or the orientation sensor comprising the above-mentioned components can be very small in size. Such a device is easy to attach to almost any product quite discreetly. This way, the customer may not even notice how the orientation of the product she is handling is monitored. The accelerometer may be e.g. of 3 or more axis type, depending on the prevailing situation or requirements.

In one embodiment of the invention, an accelerometer or orientation sensor connectable to the product may be integrated in the product to be presented. Several products such as mobile phones, computers or cars have accelerometers or other orientation sensors and transmitters for transmitting the sensor signal. The program codes required by the invention can then be stored in the product in question or its control system. Thus, e.g. an orientation sensor in a mobile phone or in a car can be utilised in the invention. A digital model according to the invention can thus be activated e.g. when a customer grabs a mobile phone, opens a car door or sits in a car.

In one embodiment of the invention, the monitoring means for monitoring orientation of a product and generating orientation data comprise pattern recognition means. In a corresponding method, the orientation of the product is monitored, and the orientation data of the product is produced with pattern recognition means. Pattern recognition means are known and not per se an object of the present invention. They typically comprise a camera and software means for performing a recognition based on an image the camera produces.

In one embodiment of the invention, interaction data, such as information on movement of each product, e.g. interaction count of the product, interaction time, and on the orientation in which the product has been held and for how long, is stored in a data storage, such as a database. This provides measurable data and valuable information, for example, on the effectiveness of product presentations, on the effectiveness between different products, and on possible changes in interaction times and interaction counts due to changes in presentations, offers, and/or other campaigns. In this way, it is possible to estimate how different types of measures affect the handling of products. Changes can be evaluated numerically and analyses can be performed according to KPIs (Key Performance Indicators).

In one embodiment of the invention, in addition to the interaction data collected other measurable information can be utilized, for example information on passers-by and their number, information from door counter, information generated by queueing number machine, and information on checkout reports, e.g. product sales volume and sales times. This makes it possible to evaluate the efficiency of sales funnels for different products.

In one embodiment of the invention, information according to the invention about the products, such as a digital model of a product, is shown on a display device, when a product is moved or when monitoring means such as a pattern recognition device or a motion sensor detect a user to be a particular location, e.g. at a certain distance from a product to be represented. When certain criteria are met, a second information is shown on the display device. The second information could be, for example, a video presentation promoting the product. This kind of a criterion for activating the second information may be, for example, that a certain time has elapsed since any product being monitored has been moved in the vicinity of the display device. This results in a product presentation in which the display device is activated when the customer is interested in the product, that is, e.g. if the customer takes the product in her hand or is present in the vicinity of the product.

### BRIEF DESCRIPTION OF THE FIGURES

The invention is described in more detail below with reference to the enclosed schematic drawing, in which
- Figure 1: shows a consumer and a system according to the invention,
- Figure 2: shows information obtained with the invention,
- Figure 3: shows a consumer and a product in a first orientation, and
- Figure 4: shows a consumer and a product in a second orientation.

### DETAILED DESCRIPTION OF THE EXAMPLES OF THE FIGURES

For the sake of clarity, same reference numerals are used in different figures and embodiments for some of the corresponding parts.

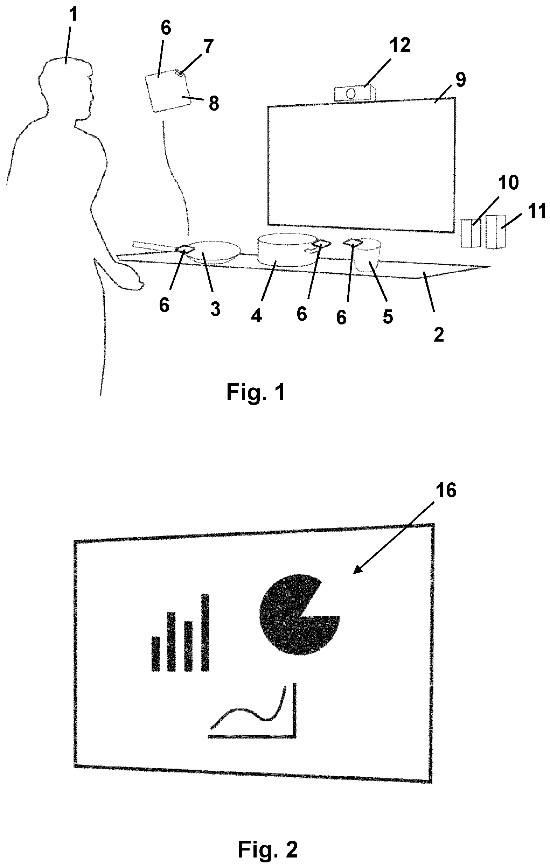

Figures 1, 3 and 4 show a consumer 1 exploring kitchenware 3, 4, 5 on a table 2 of a store. An orientation sensor 6 is attached e.g. with a sticker to each piece of kitchenware, which orientation sensor is also shown enlarged in Figure 1 for clarity.

The corner of the orientation sensor 6 has an opening 7 for easy attachment. Functionally connected components of the orientation sensor (not shown), i.e. a 3-axis accelerometer, a battery, a BLE radio transmitter (Bluetooth Low Energy) and a microcontroller controlling the operation of the motion sensor, are placed inside a housing 8. Many different wireless transmission technologies can be used in the invention for data transmission, such as BLE, Bluetooth, ZigBee, LoRa. When the accelerometer produces a signal, the radio transmitter transmits it to the receiver 10 and further to a central computer 11 of the system. The computer 11 comprises a media player which controls image and sound to be displayed by a display device 9. Attached on the display device 9 is a camera of a pattern recognition device 12. The pattern recognition data storage, such as a database and software, is mainly on the central computer 11. In the memory of the central computer 11 there is a data storage such as a database, which maintains digital models 13 of the products 3, 4, 5, 13 to be presented. Other product information 14, such as technical properties, manuals and price information of the products are also kept in the data storage

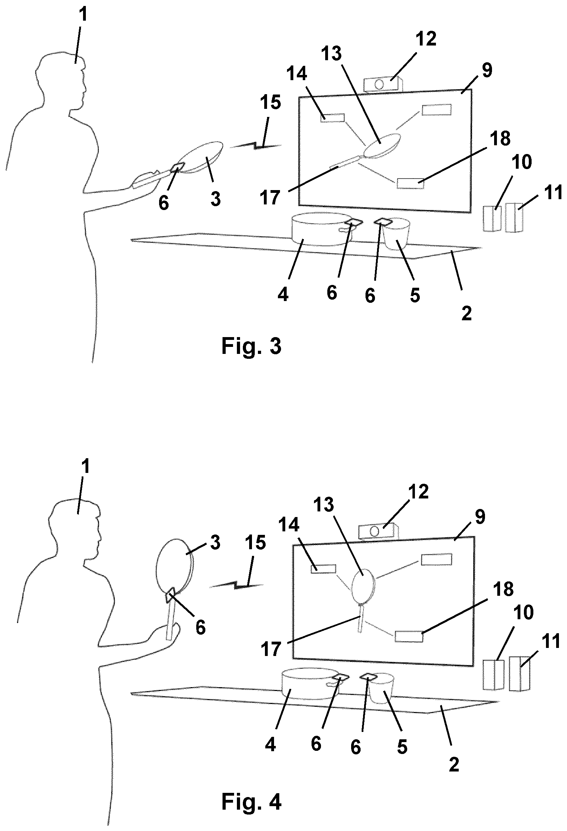

The operation of the system is illustrated in Figures 3 and 4. When the customer 1 grips a frying pan 3, the accelerometer of the orientation sensor 6 generates an orientation data signal 15, which is transmitted wirelessly to the receiver 10 by the radio transmitter of the orientation sensor. From there, the orientation data is further directed to the system's central computer 11. The central computer 11 comprises software which, after receiving orientation data from the orientation sensor 6, identifies an identifier in the orientation data signal 15, which indicates which product has been moved. In this case, the software activates the digital model 13 of the frying pan 3 and calculates on basis of the orientation data it received, in which orientation the customer is holding the frying pan 3. The data produced by the software is converted via the media player into a model of the frying pan to be displayed on the display device 9, i.e. into image 13. The model 13 of the frying pan to be displayed is in the same orientation as the real frying pan 3 is in the customer's hand. In the example of the figures, technical information 14, for example about the materials or the care instructions for the pan, is tied to different parts of the frying pan. This product information is also displayed on the display device 9.

As shown in Figure 4, when the customer 1 turns the frying pan 3 in his hand, the image 13 of the model on the display device also turns. The displayed product information 14 is also moved in the image. The product information displayed may also change depending on the orientation of the frying pan 3. The handle 17 of the frying pan has moved between the situations in Figures 3 and 4, and the product information 18 about the handle has moved accordingly. For example, the bottom of the frying pan 3 is not shown at all in Figures 3 and 4. Product information about the properties of the bottom are also not shown. They are only displayed when the bottom is visible on the display device 9.

Before the customer grabbed the frying pan 3, the display device could show, for example, a video promoting products 3, 4, and 5. After a certain time has elapsed since the customer has lowered the frying pan from his hand to the table 2 and has not grasped the other monitored products, i.e. the pot 4 or the bowl 5, and has left the vicinity of the table 2, the software of the central computer 11 instructs the media player to switch display 9 into showing the promoting video again.

The pattern recognition device 12 can also be used for monitoring the movements of products according to the invention. The products to be presented and their different orientations may have been taught to the pattern recognition device. The pattern recognition device 12 can also be used to monitor customers and their activities. For example, the proximity of the customer can be identified, and sounds or images can be triggered on the display device accordingly.

The information provided by the orientation sensor 6 and the pattern recognition device 12 can be used to trigger various alarms. For example, if it is detected that a product is dropped or struck too hard, or if inappropriate shaking or throwing of the product is detected, an alarm can be given e.g. to staff. When an alarm is triggered, the camera 12 and/or another camera in the store can be turned on, and/or material shot by a camera from a certain period of time can be recorded. If the camera has already shot before the alarm, the footage can be recorded starting e.g. 30 seconds or one minute before the alarm was triggered.

Figure 2 shows in a simplified manner how the invention can more easily produce many different types of measurable data 16. This data is easy to use for many purposes.

## Claims

1. A system for presenting physical products (3, 4, 5) to a customer (1), the system comprising
- monitoring means (6, 12), arranged to monitor movement of the products and to produce movement data of the products;
- a display device (9);
- at least one computer (11);
- data transmission means between the monitoring means and the computer and between the computer and the display device;
and on the at least one computer (11)
- product determining means, arranged to determine which product is moved on basis of the movement data;
- data storage comprising digital models (13) of a plurality of products (3, 4, 5);
- activation means arranged to activate a digital model (13) of the moved product selected from the plurality of models on basis of the movement data produced by the monitoring means (6, 12);
- presentation means, arranged to display the activated digital model (13) to the client (1) on the display device (9);
**characterized in that**
the monitoring means are arranged to monitor orientation of the products and to generate orientation data and they comprise a plurality of orientation sensors (6) each comprising an accelerometer, a power supply, a microcontroller and a radio transmitter, attachable to the products, for producing acceleration data of the products by detecting a change in the orientation sensor's orientation and sending the orientation data (15) forward with the radio transmitter;
and that the orientation sensors (6) are arranged to generate an orientation data signal (15), which is transmitted wirelessly to a receiver (10) by the radio transmitter of the orientation sensor, from where the orientation data is further directed to the system's computer (11); the computer (11) comprising software which, after receiving orientation data from the orientation sensor (6) is arranged to identify an identifier in the orientation data signal (15), which indicates which product has been moved.

2. A system according to claim 1, **characterized in that** if an identifier in the orientation data signal (15) has been identified to indicate which product has been moved, the computer (11) software is arranged:
- to calculate on basis of the orientation data it received, in which orientation the product is.

3. A system according to claim 1 or 2, **characterized in that** the accelerometers are integrated in the products to be presented.

4. A system according to claim 1, 2 or 3, **characterized in that** the monitoring means comprise pattern recognition means (12) for producing movement data of the products.

5. System according to any one of the preceding claims 1 to 4, **characterized in that** the activation means are arranged to activate a digital model (13) of the moved product on basis of the orientation data produced with the monitoring means (6, 12).

6. A system according to any claim 1 to 5, **characterized in that** it comprises calculation means, arranged to calculate orientation of the activated digital model (13) on basis of the orientation data so that the calculated orientation of the digital model changes when orientation of the physical product (3, 4, 5) changes, whereby in each calculated orientation a certain part of the digital model is calculated to be displayed on the display device (9), whereby the presentation means are arranged to display the activated digital model (13) on the display device (9) in the calculated orientation of the digital model.

7. A system according to claim 6, **characterized in that** the data storage comprises product information (14, 18) of the products to be presented, of which product information at least a portion (18) is tied to a specific part (17) of the digital model, whereby the system comprises:
- product information selection means, arranged to select to be displayed on the display device (9) such product information (18), which is tied to a part (17) of the digital model that is calculated to be displayed on the display device (9).

8. A system according to claim 5, 6 or 7, **characterized in that** the digital model of the product comprises
- a three-dimensional model that can be viewed freely in different orientations, or
- two or more two-dimensional images that show the product from different directions, whereby in each of the calculated orientations, only one of said images is arranged to be displayed on the display device (9), or
- one or more video clips, or
- a model in which a video clip is displayed when viewed from a certain direction.

9. A system according to any one of the preceding claims, **characterized in that** the accelerometer, the power supply, the microcontroller and the radio transmitter are situated in a single housing (8).

10. A method for presenting physical products (3, 4, 5) to a customer (1), the method comprising at least the following steps
- monitoring movement of the products (3, 4, 5) with monitoring means (6, 12) and producing movement data of the products;
- determining, on basis of the movement data, which product is moved;
- maintaining digital models (13) of a plurality of products (3, 4, 5) in a data storage;
- activating a digital model (13) of the moved product selected from the plurality of models on basis of the movement data produced with the monitoring means (6, 12);
- displaying the activated digital model (13) to the client (1) on a display device (9);
**characterized in** monitoring orientation of the products and generating orientation data by producing acceleration data of the products with a plurality of orientation sensors (6) each comprising an accelerometer, a power supply, a microcontroller and a radio transmitter, attachable to the products, wherein the digital model (13) is activated on basis of the acceleration data produced with the orientation sensor (6) attached to a corresponding product by detecting a change in the orientation sensor's orientation and sending the orientation data (15) forward with the radio transmitter;
generating an orientation data signal (15) with the orientation sensor (6), and transmitting the orientation data signal by the radio transmitter of the orientation sensor wirelessly to a receiver (10), from where the orientation data is further directed to the system's computer (11); the computer (11) comprising software which, after receiving orientation data from the orientation sensor (6) identifies in the orientation data signal (15) an identifier indicating which product has been moved.

11. A method according to claim 10, **characterized in that** if an identifier in the orientation data signal (15) has been identified to indicate which product has been moved, the computer (11) software:
- calculates on basis of the orientation data it received, in which orientation the product is.

12. A method according to claim 10 or 11, **characterized in that** the accelerometers are integrated in the products to be presented.

13. A method according to claim 10, 11 or 12, **characterized in** producing movement data of the products with pattern recognition means (12), whereby the digital model (13) is activated on basis of the movement data produced with the pattern recognition means (12).

14. A method according to any previous claim 10 to 13, **characterized in that** the digital model (13) is activated on basis of the orientation data produced with the monitoring means (6, 12).

15. A method according to claim 14, **characterized in**
- calculating the orientation of the activated digital model (13) on basis of the orientation data with calculation means,
- changing the calculated orientation of the digital model (13) when orientation of the physical product (3, 4, 5) changes, whereby in each calculated orientation a certain part of the digital model is calculated to be displayed on the display device (9), whereby
- displaying the activated digital model (13) on the display device (9) in the calculated orientation of the digital model.

16. A method according to claim 15, **characterized in that** the data storage comprises product information (14, 18) of the products to be presented, of which product information at least a portion (18) is tied to a specific part (17) of the digital model, whereby
- displaying on the display device (9) such product information (18), which is tied to a part (17) of the digital model that is displayed on the display device (9).

17. A method according to claim 14, 15 or 16, **characterized in that** the digital model of the product comprises
- a three-dimensional model that can be viewed freely in different orientations, or
- two or more two-dimensional images that show the product from different directions, whereby in each calculated orientation only one of said images is displayed on the display device (9), or
- one or more video clips, or
- a model in which a video clip is displayed when viewed from a certain direction.

## Patentansprüche

1. Ein System, um einem Kunden (1) physische Produkte (3, 4, 5) zu präsentieren, das Folgendes umfasst:
- Überwachungsmittel (6, 12), die eingerichtet sind, um die Bewegung der Produkte zu überwachen und Bewegungsdaten der Produkte zu erzeugen;
- ein Anzeigegerät (9);
- mindestens ein Computer (11);
- Mittel zur Datenübertragung zwischen dem Überwachungsmittel und dem Computer und zwischen dem Computer und dem Anzeigegerät:
und auf dem/den Computer/n (11)
- Mittel zur Produktüberwachung, die eingerichtet sind, um zu bestimmen, welches Produkt beruhend auf den Bewegungsdaten bewegt wird;
- ein Datenspeicher, bestehend aus digitalen Modellen (13) einer Vielzahl der Produkte (3, 4, 5);
- Aktivierungsmittel zum Aktivieren eines digitalen Modells (13) des bewegten Produkts, das aus der Vielzahl von Modellen auf Grundlage der vom Überwachungsmitteln (6, 12) erzeugten Bewegungsdaten ausgewählt wird;
- Präsentationsmittel, die eingerichtet sind, um einem Kunden (1) das aktivierte digitale Modell (13) auf dem Anzeigegerät (9) anzuzeigen;
**dadurch gekennzeichnet, dass**
die Überwachungsmittel eingerichtet sind, um die Ausrichtung der Produkte zu überwachen und Ausrichtungsdaten zu erzeugen, und dass sie mehrere Ausrichtungssensoren (6) umfassen, die jeweils einen Beschleunigungsmesser, eine Stromversorgung, einen Mikrocontroller und einen Funksender umfassen und an den Produkten angebracht werden können, um Beschleunigungsdaten der Produkte zu erzeugen, indem sie eine Änderung der Ausrichtung des Ausrichtungssensors erkennen und die Ausrichtungsdaten (15) mit dem Funksender weiterleiten;
und dass die Ausrichtungssensoren (6) eingerichtet sind, um ein Ausrichtungsdatensignal (15) zu erzeugen, das vom Funksender des Ausrichtungssensors drahtlos an einen Empfänger (10) übertragen wird, von wo aus die Ausrichtungsdaten an den Computer (11) des Systems weitergeleitet werden, der Computer (11) Software enthält, die nach dem Empfang der Ausrichtungsdaten vom Ausrichtungssensor (6) dazu ausgelegt ist, im Ausrichtungsdatensignal (15) eine Kennung zu identifizieren, die anzeigt, welches Produkt bewegt wurde.

2. Ein System nach Anspruch 1, **dadurch gekennzeichnet, dass** die Computersoftware (11) dann, wenn eine Kennung im Ausrichtungsdatensignal (15) identifiziert wurde, die anzeigt, welches Produkt bewegt wurde, eingerichtet ist,
- um auf Grundlage der empfangenen Ausrichtungsdaten die Ausrichtung des Produkts zu ermitteln.

3. Ein System nach Anspruch 1 oder 2, **dadurch gekennzeichnet, dass** die Beschleunigungsmesser in die zu präsentierenden Produkte integriert sind.

4. Ein System nach Anspruch 1, 2 oder 3, **dadurch gekennzeichnet, dass** die Überwachungsmittel Mustererkennungsmittel (12) zum Erzeugen von Bewegungsdaten der Produkte umfassen.

5. Ein System nach einem der vorhergehenden Ansprüche 1 bis 4, **dadurch gekennzeichnet, dass** die Aktivierungsmittel eingerichtet sind, um auf Grundlage der mit den Überwachungsmitteln (6, 12) erzeugten Ausrichtungsdaten ein digitales Modell (13) des bewegten Produkts zu aktivieren.

6. Ein System nach einem der Ansprüche 1 bis 5, **dadurch gekennzeichnet, dass** es Berechnungsmittel umfasst, die eingerichtet sind, um die Ausrichtung des aktivierten digitalen Modells (13) auf Grundlage der Ausrichtungsdaten zu berechnen, sodass sich die berechnete Ausrichtung des digitalen Modells ändert, wenn sich die Ausrichtung des physischen Produkts (3, 4, 5) ändert, wobei in jeder berechneten Ausrichtung ein bestimmter Teil des digitalen Modells so berechnet wird, dass er auf dem Anzeigegerät (9) angezeigt wird, wobei die Präsentationsmittel eingerichtet sind, um das aktivierte digitale Modell (13) auf dem Anzeigegerät (9) in der berechneten Ausrichtung des digitalen Modells anzuzeigen.

7. Ein System nach Anspruch 6, **dadurch gekennzeichnet, dass** der Datenspeicher Produktinformationen (14, 18) der zu präsentierenden Produkte enthält, von denen zumindest ein Teil (18) an einen bestimmten Teil (17) des digitalen Modells gebunden ist, wobei das System Folgendes umfasst:
- Mittel zur Produktinformationsauswahl, die eingerichtet sind, um solche Produktinformationen (18) zur Anzeige auf dem Anzeigegerät (9) auszuwählen, die an einen Teil (17) des digitalen Modells gebunden sind, der zur Anzeige auf dem Anzeigegerät (9) berechnet ist.

8. Ein System nach Anspruch 5, 6 oder 7, **dadurch gekennzeichnet, dass** das digitale Modell des Produkts Folgendes umfasst:
- Ein dreidimensionales Modell, das in verschiedenen Ausrichtungen frei angezeigt werden kann, oder
- zwei oder mehr zweidimensionale Bilder, die das Produkt aus unterschiedlichen Richtungen zeigen, wobei in jeder der berechneten Ausrichtungen nur eines der Bilder zur Anzeige auf dem Anzeigegerät (9) vorgesehen ist, oder
- ein oder mehrere Videoclips, oder
- ein Modell, in dem ein Videoclip gezeigt wird, wenn das Produkt aus einer bestimmten Richtung angesehen wird.

9. Ein System nach einem der vorhergehenden Ansprüche, **dadurch gekennzeichnet, dass** der Beschleunigungsmesser, die Stromversorgung, der Mikrocontroller und der Funksender in einem einzigen Gehäuse (8) untergebracht sind.

10. Eine Methode, um einem Kunden (1) physische Produkte (3, 4, 5) zu präsentieren, wobei die Methode mindestens die folgenden Schritte umfasst:
- Überwachen der Bewegung der Produkte (3, 4, 5) mit Überwachungsmitteln (6, 12) und Erzeugen von Bewegungsdaten der Produkte;
- Bestimmen auf Grundlage der Bewegungsdaten, welches Produkt bewegt wird;
- Verwalten digitaler Modelle (13) einer Vielzahl der Produkte (3, 4, 5) in einem Datenspeicher;
- Aktivieren eines digitalen Modells (13) des bewegten Produkts, das aus der Vielzahl von Modellen auf Grundlage der von den Überwachungsmitteln (6, 12) erzeugten Bewegungsdaten ausgewählt wird;
- Anzeigen des digitalen Modells (13) für den Kunden (1) auf dem Anzeigegerät (9);
**dadurch gekennzeichnet, dass** die Ausrichtung der Produkte überwacht und die Ausrichtungsdaten durch Erzeugen von Beschleunigungsdaten der Produkte mit einer Vielzahl von Ausrichtungssensoren (6) generiert werden, die jeweils einen Beschleunigungsmesser, eine Stromversorgung, einen Mikrocontroller und einen Funksender umfassen und an den Produkten angebracht werden können, wobei das digitale Modell (13) auf Grundlage der Beschleunigungsdaten aktiviert wird, die mit dem an einem entsprechenden Produkt angebrachten Ausrichtungssensor (6) erzeugt werden, indem eine Änderung der Ausrichtung des Ausrichtungssensors erkannt und die Ausrichtungsdaten (15) mit dem Funksender weitergeleitet werden;
dass ein Ausrichtungsdatensignal (15) mit dem Ausrichtungssensor (6) erzeugt und das Ausrichtungsdatensignal durch den Funksender vom Ausrichtungssensor an einen Empfänger (10) übertragen wird, von wo aus die Ausrichtungsdaten an den Computer (11) des Systems weitergeleitet werden; dass der Computer (11) eine Software umfasst, die nach dem Empfangen der Ausrichtungsdaten vom Ausrichtungssensor (6) im Ausrichtungsdatensignal (15) eine Kennung identifiziert, die anzeigt, welches Produkt bewegt wurde.

11. Eine Methode nach Anspruch 10, **dadurch gekennzeichnet, dass** die Computersoftware (11) dann, wenn eine Kennung im Ausrichtungsdatensignal (15) identifiziert wurde, die anzeigt, welches Produkt bewegt wurde,
- die Ausrichtung des Produkts auf Grundlage der empfangenen Ausrichtungsdaten berechnet.

12. Eine Methode nach Anspruch 10 oder 11, **dadurch gekennzeichnet, dass** die Beschleunigungsmesser in die zu präsentierenden Produkte integriert sind.

13. Eine Methode nach Anspruch 10, 11 oder 12, **dadurch gekennzeichnet, dass** sie Bewegungsdaten der Produkte mit Mustererkennungsmitteln (12) produziert, wobei das digitale Modell (13) auf Grundlage der mit den Mustererkennungsmitteln (12) erzeugten Bewegungsdaten aktiviert wird.

14. Eine Methode nach einem der vorhergehenden Ansprüche 10 bis 13, **dadurch gekennzeichnet, dass** das digitale Modell (13) auf Grundlage der mit den Überwachungsmitteln (6, 12) erzeugten Ausrichtungsdaten aktiviert wird.

15. Eine Methode nach Anspruch 14, **dadurch gekennzeichnet, dass**
- die Ausrichtung des aktivierten digitalen Modells (13) auf Grundlage der Ausrichtungsdaten mit Berechnungsmitteln berechnet wird,
- die berechnete Ausrichtung des digitalen Modells (13) geändert wird, wenn sich die Ausrichtung des physischen Produkts (3, 4, 5) ändern, wobei bei jeder berechneten Ausrichtung ein bestimmter Teil des digitalen Modells für die Anzeige auf dem Anzeigegerät (9) berechnet wird, wobei
- das aktivierte digitale Modell (13) auf dem Anzeigegerät (9) in der berechneten Ausrichtung des digitalen Modells angezeigt wird.

16. Eine Methode nach Anspruch 15, **dadurch gekennzeichnet, dass** der Datenspeicher Produktinformationen (14, 18) der zu präsentierenden Produkte umfasst, von denen zumindest ein Teil (18) an einen bestimmten Teil (17) des digitalen Modells gebunden ist, wobei
- auf dem Anzeigegerät (9) solche Produktinformationen (18) angezeigt werden, die an einen Teil (17) des digitalen Modells gebunden sind, der zur Anzeige auf dem Anzeigegerät (9) berechnet ist.

17. Eine Methode nach Anspruch 14, 15 oder 16, **dadurch gekennzeichnet, dass** das digitale Modell des Produkts Folgendes umfasst:
- Ein dreidimensionales Modell, das in verschiedenen Ausrichtungen frei angezeigt werden kann, oder
- zwei oder mehr zweidimensionale Bilder, die das Produkt aus unterschiedlichen Richtungen zeigen, wobei in jeder berechneten Ausrichtung nur eines der Bilder auf dem Anzeigegerät (9) angezeigt wird, oder
- ein oder mehrere Videoclips, oder
- ein Modell, in dem ein Videoclip gezeigt wird, wenn das Produkt aus einer bestimmten Richtung angesehen wird.

## Revendications

1. Un système de présentation de produits physiques (3, 4, 5) à un client (1), comprenant
- des moyens de surveillance (6, 12), conçus pour surveiller le mouvement des produits et pour produire des données de mouvement des produits ;
- un dispositif d'affichage (9) ;
- au moins un ordinateur (11) ;
- des moyens de transmission de données entre les moyens de surveillance et l'ordinateur et entre l'ordinateur et le dispositif d'affichage ;
et sur l'au moins un ordinateur (11)
- des moyens de détermination du produit, conçus pour déterminer quel produit est déplacé sur la base des données de mouvement ;
- stockage de données comprenant des modèles numériques (13) d'une pluralité de produits (3, 4, 5) ;
- des moyens d'activation conçus pour activer un modèle numérique (13) du produit déplacé sélectionné parmi la pluralité de modèles sur la base des données de mouvement produites par les moyens de surveillance (6, 12)
- des moyens de présentation, conçus pour afficher le modèle numérique activé (13) au client (1) sur le dispositif d'affichage (9) ;
**caractérisé en ce que**
les moyens de surveillance sont conçus pour surveiller l'orientation des produits et pour générer des données d'orientation et ils comprennent une pluralité de capteurs d'orientation (6) comprenant chacun un accéléromètre, une alimentation électrique, un microcontrôleur et un émetteur radio, pouvant être fixés aux produits, pour produire des données d'accélération des produits en détectant un changement d'orientation du capteur d'orientation et en envoyant les données d'orientation (15) vers l'avant avec l'émetteur radio ;
et que les capteurs d'orientation (6) sont conçus pour générer un signal de données d'orientation (15), qui est transmis sans fil à un récepteur (10) par l'émetteur radio du capteur d'orientation, d'où les données d'orientation sont ensuite dirigées vers l'ordinateur du système (11) ; l'ordinateur (11) comprenant un logiciel qui, après avoir reçu les données d'orientation du capteur d'orientation (6), est conçu pour identifier un identificateur dans le signal de données d'orientation (15), qui indique quel produit a été déplacé.

2. Un système selon la revendication 1, **caractérisé en ce que** si un identificateur dans le signal de données d'orientation (15) a été identifié pour indiquer quel produit a été déplacé, le logiciel de l'ordinateur (11) est conçu :
- pour calculer, sur la base des données d'orientation qu'il a reçues, dans quelle orientation se trouve le produit.

3. Un système selon la revendication 1 ou 2, **caractérisé en ce que** les accéléromètres sont intégrés dans les produits à présenter.

4. Un système selon la revendication 1, 2 ou 3, **caractérisé en ce que** les moyens de surveillance comprennent des moyens de reconnaissance des formes (12) pour produire des données de mouvement des produits.

5. Système selon l'une quelconque des revendications 1 à 4 précédentes, **caractérisé en ce que** les moyens d'activation sont conçus pour activer un modèle numérique (13) du produit déplacé sur la base des données d'orientation produites par les moyens de surveillance (6, 12).

6. Un système selon l'une quelconque des revendications 1 à 5, **caractérisé en ce qu'**il comprend des moyens de calcul, conçus pour calculer l'orientation du modèle numérique activé (13) sur la base des données d'orientation de sorte que l'orientation calculée du modèle numérique change lorsque l'orientation du produit physique (3, 4, 5) change, de sorte que dans chaque orientation calculée, une certaine partie du modèle numérique est calculée pour être affichée sur le dispositif d'affichage (9), de sorte que les moyens de présentation sont conçus pour afficher le modèle numérique activé (13) sur le dispositif d'affichage (9) dans l'orientation calculée du modèle numérique.

7. Un système selon la revendication 6, **caractérisé en ce que** le stockage de données comprend des informations sur les produits (14, 18) à présenter, dont au moins une partie (18) est liée à une partie spécifique (17) du modèle numérique, de sorte que le système comprend :
- des moyens de sélection des informations sur les produits, conçus pour sélectionner les informations sur les produits (18) à afficher sur le dispositif d'affichage (9), qui sont liées à une partie (17) du modèle numérique calculée pour être affichée sur le dispositif d'affichage (9).

8. Un système selon la revendication 5, 6 ou 7, **caractérisé en ce que** le modèle numérique du produit comprend
- un modèle tridimensionnel qui peut être regardé librement dans différentes orientations, ou
- deux ou plusieurs images bidimensionnelles montrant le produit dans différentes directions, de sorte qu'une seule de ces images étant conçue à être affichée sur le dispositif d'affichage (9) dans chacune des orientations calculées, ou
- un ou plusieurs clips vidéo, ou
- un modèle dans lequel un clip vidéo est affiché lorsqu'il est regardé dans une certaine direction.

9. Un système selon l'une quelconque des revendications précédentes, **caractérisé en ce que** l'accéléromètre, l'alimentation électrique, le microcontrôleur et l'émetteur radio sont situés dans un seul boîtier (8).

10. Une méthode de présentation de produits physiques (3, 4, 5) à un client (1), comprenant au moins les étapes suivantes
- surveiller mouvement des produits (3, 4, 5) à l'aide de moyens de surveillance (6, 12) et produire des données de mouvement des produits ;
- déterminer, sur la base des données de mouvement, quel produit est déplacé ;
- maintenir des modèles numériques (13) d'une pluralité de produits (3, 4, 5) dans un stockage de données ;
- activer un modèle numérique (13) du produit déplacé sélectionné parmi la pluralité de modèles sur la base des données de mouvement produites par les moyens de surveillance (6, 12) ;
- afficher le modèle numérique activé (13) au client (1) sur un dispositif d'affichage (9) ;
**caractérisé par** la surveillance de l'orientation des produits et la génération de données d'orientation par la production de données d'accélération des produits avec une pluralité de capteurs d'orientation (6) comprenant chacun un accéléromètre, une alimentation électrique, un microcontrôleur et un émetteur radio, pouvant être fixés aux produits, dans lequel le modèle numérique (13) est activé sur la base des données d'accélération produites avec le capteur d'orientation (6) fixé à un produit correspondant en détectant un changement dans l'orientation du capteur d'orientation et en envoyant les données d'orientation (15) vers l'avant avec l'émetteur radio ;
la génération d'un signal de données d'orientation (15) avec le capteur d'orientation (6), et la transmission du signal de données d'orientation par l'émetteur radio du capteur d'orientation sans fil à un récepteur (10), d'où les données d'orientation sont ensuite dirigées vers l'ordinateur du système (11) ; l'ordinateur (11) comprenant un logiciel qui, après avoir reçu des données d'orientation du capteur d'orientation (6), identifie dans le signal de données d'orientation (15) un identificateur indiquant quel produit a été déplacé.

11. Une méthode selon la revendication 10, **caractérisé en ce que** si un identificateur dans le signal de données d'orientation (15) a été identifié pour indiquer quel produit a été déplacé, le logiciel de l'ordinateur (11) :
- calcule, sur la base des données d'orientation qu'il a reçues, dans quelle orientation se trouve le produit.

12. Une méthode selon la revendication 10 ou 11, **caractérisé en ce que** les accéléromètres sont intégrés dans les produits à présenter.

13. Une méthode selon l'une des revendications 10, 11 ou 12, **caractérisé par** la production des données de mouvement des produits à l'aide de moyens de reconnaissance des formes (12), de sorte que le modèle numérique (13) est activé sur la base des données de mouvement produites à l'aide des moyens de reconnaissance des formes (12).

14. Une méthode selon l'une quelconque des revendications précédentes 10 à 13, **caractérisé en ce que** le modèle numérique (13) est activé sur la base des données d'orientation produites par les moyens de surveillance (6, 12).

15. Une méthode selon la revendication 14, **caractérisée par** le fait de
- calculer l'orientation du modèle numérique activé (13) sur la base des données d'orientation à l'aide de moyens de calcul,
- modifier l'orientation calculée du modèle numérique (13) lorsque l'orientation du produit physique (3, 4, 5) est modifiée, de sorte que dans chaque orientation calculée, une certaine partie du modèle numérique est calculée pour être affichée sur le dispositif d'affichage (9), ce qui permet
- d'afficher le modèle numérique activé (13) sur le dispositif d'affichage (9) dans l'orientation calculée du modèle numérique.

16. Une méthode selon la revendication 15, **caractérisé en ce que** le stockage de données comprend des informations sur les produits (14, 18) à présenter, dont au moins une partie (18) est liée à une partie spécifique (17) du modèle numérique, ce qui permet
- d'afficher sur le dispositif d'affichage (9) ces informations sur le produit (18), qui sont liées à une partie (17) du modèle numérique affiché sur le dispositif d'affichage (9).

17. Une méthode selon la revendication 14, 15 ou 16, **caractérisé en ce que** le modèle numérique du produit comprend
- un modèle tridimensionnel pouvant être regardé librement dans différentes orientations, ou
- deux ou plusieurs images bidimensionnelles montrant le produit dans différentes directions, une seule de ces images étant affichée sur le dispositif d'affichage (9) dans chaque orientation calculée, ou
- un ou plusieurs clips vidéo, ou
- un modèle dans lequel un clip vidéo est affiché lorsqu'il est regardé depuis une certaine direction.
